# FASCICULE DE BREVET EUROPEEN

(11) **EP 4 472 808 B1**
(45) Date de publication et mention de la délivrance du brevet: **10.09.2025**
(21) Numéro de dépôt: 23702816.2
(22) Date de dépôt: 03.02.2023
(51) Int. Cl.: B25J 15/00, B25J 15/06, B65G 47/91, B66C 1/02, B65G 47/52, B65G 47/46

(54) **DISPOSITIF DE MANUTENTION DE COLIS COMPRENANT UNE TÊTE DE PRÉHENSION DE COLIS À BUSES D'ASPIRATION**
VORRICHTUNG ZUR HANDHABUNG VON PAKETEN MIT EINEM PAKETGREIFKOPF MIT SAUGDÜSEN
DEVICE FOR HANDLING PARCELS, COMPRISING A PARCEL-GRIPPING HEAD WITH SUCTION NOZZLES

(30) Priorité: 04.02.2022 FR 2200997
(43) Date de publication de la demande: 11.12.2024
(73) Titulaire: Solystic, 92227 Bagneux (FR)
(72) Inventeur: BREYSSE, Steve, 07800 Saint-Georges-les-Bains (FR); BLACHE, Richard, 07610 Lemps (FR); PANO, Damien, 26120 Malissard (FR); STOKLET, Vincent, 26500 Bourg-les-Valence (FR)
(74) Mandataire: IP Trust
(86) Numéro de dépôt international: PCT/EP2023/052643
(87) Numéro de publication internationale: WO 2023/148308

(56) Documents cités:
- EP-A2- 2 960 024
- FR-A1- 2 924 373
- GB-A- 2 594 758
- US-A1- 2019 344 448
- US-A1- 2021 179 366
- SOLYSTIC SAS: "Post NL, an innovative and highly robotized logistic center designed by Solystic", 19 October 2022 (2022-10-19), XP093036548, Retrieved from the Internet <URL:https://www.youtube.com/watch?v=87xr-n0itOA> [retrieved on 20230331]

## Description

### Domaine technique

L'invention concerne le domaine du tri de colis effectué dans les centres de tri de colis et les installations logistiques. L'invention concerne plus particulièrement un dispositif de manutention de colis comprenant une tête de préhension mobile équipée d'une pluralité de buses d'aspiration chacune terminée par une ventouse conçue pour saisir par aspiration un colis par le dessus.

### Technique antérieure

Les centres de tri de colis sont pour la plupart équipés de dispositifs de manutention de colis automatisés conçus pour récupérer les colis un par un depuis une pile de colis stockés en vrac et pour les déplacer sur un convoyeur de tri qui alimente ensuite des sorties de tri en fonction d'une certaine indication de tri apposée sur les colis.

Les documents US2020/0262069, US2021179366, GB2594758 et FR2924373 décrivent à ce propos un dispositif de manutention comprenant une tête de préhension mobile équipée d'une pluralité de buses d'aspiration chacune terminée par une ventouse.

Dans le cadre du tri de colis, la tête de préhension est généralement conçue pour se déplacer au-dessus du vrac de colis et venir se positionner à l'aplomb du colis à saisir.

La tête de préhension est ensuite déplacée vers le bas de sorte que les ventouses des buses d'aspiration viennent au contact du colis à saisir par le dessus.

Il arrive cependant que certaines ventouses n'arrivent pas à créer une étanchéité suffisante avec la surface du colis lors de l'aspiration et ce malgré la capacité des ventouses à se déformer pour épouser au mieux la forme de la face de préhension du colis.

Cela arrive généralement lorsque le colis à saisir est partiellement recouvert par un autre colis du vrac de colis ou bien parce qu'il ne présente pas une surface de préhension suffisamment plane.

Cette mauvaise étanchéité créée des fuites d'air qui augmentent le risque de faire chuter le colis lors son déplacement par la tête de préhension.

Dans le cas de fuites importantes, certains colis peuvent même ne pas être saisis depuis le vrac de colis.

Les colis sont alors évacués sur un convoyeur de rejet pour être remis en circulation pour une nouvelle tentative de saisie par le dispositif de manutention, augmentant de facto le temps de tri et les coûts de fonctionnement.

Pour pallier à ce problème, les dispositifs de manutention actuels proposent des systèmes d'aspiration plus puissants capables de combler les fuites d'air en augmentant la puissance d'aspiration.

Ce type de dispositif de manutention est cependant très volumineux, bruyant et peu maniable au niveau de la tête de préhension du fait du diamètre important des tuyaux d'aspiration d'air reliés aux buses d'aspiration.

### Exposé de l'invention

La présente invention a pour but de répondre aux problèmes précités en proposant un dispositif de manutention moins volumineux et plus efficace dans la succion de colis.

La présente invention a donc pour objet un dispositif de manutention de colis comprenant une tête de préhension mobile équipée d'une pluralité de buses d'aspiration chacune terminée par une ventouse conçue pour saisir par aspiration un colis par le dessus, chaque buse d'aspiration comprenant un conduit de circulation d'air et une pompe à vide disposée dans le conduit de circulation d'air, ladite pompe à vide étant en connexion fluidique avec le conduit de circulation d'air et la ventouse, le dispositif de manutention comprenant un dispositif d'injection d'air conçu pour injecter de l'air dans les conduits de circulation d'air de manière à ce que la pompe à vide créée un vide dans les ventouses, caractérisé en ce que chaque conduit de circulation d'air comprend une section d'arrivée d'air qui s'étend sensiblement verticalement vers la ventouse et qui est reliée au dispositif d'injection d'air, une section intermédiaire qui s'étend sensiblement depuis la ventouse et qui prolonge la section d'arrivée d'air dans le sens de circulation de l'air et une section d'échappement d'air qui prolonge la section intermédiaire dans le sens de circulation de l'air et en ce que la pompe à vide est disposée dans la section intermédiaire.

Selon l'invention, le dispositif de manutention comprend en outre une unité de contrôle-commande paramétrée pour contrôler le dispositif d'injection d'air de manière à injecter de l'air dans les buses d'aspiration indépendamment les unes des autres.

L'idée à la base de l'invention est d'avoir un mécanisme d'aspiration apte à faire le vide au plus près de la surface de préhension du colis de sorte à optimiser l'efficacité d'aspiration en limitant les frottements de l'air entre la ventouse et la pompe à vide et en réduisant le temps nécessaire pour faire le vide dans la ventouse.

Plus l'aspiration sera efficace et moins la quantité d'air à aspirer sera nécessaire pour saisir le colis.

On comprend donc que le dispositif selon l'invention sera moins bruyant et moins couteux en termes de fonctionnement.

De plus, grâce à l'amélioration de l'efficacité d'aspiration, les tuyaux utilisés pour l'alimentation en air des buses d'aspiration peuvent avoir un diamètre réduit de manière à faciliter le déplacement de la tête de préhension.

Le dispositif de manutention selon l'invention peut également présenter les caractéristiques suivantes :
- la pompe à vide s'étend dans le prolongement de la ventouse de manière à former un conduit d'aspiration d'air qui s'étend sensiblement longitudinalement vers le haut ;
- la section d'échappement d'air (21) descend sensiblement le long de la section d'arrivée d'air vers la ventouse ;
- la section d'arrivée d'air comprend un orifice d'entrée d'air orienté vers le haut et la section d'échappement d'air comprend un orifice de sortie d'air orienté vers le bas ;
- la section d'échappement d'air prolonge longitudinalement la section intermédiaire dans le sens de circulation de l'air ;
- la section d'arrivée d'air comprend un orifice d'entrée d'air orienté vers le haut et la section d'échappement d'air comprend un orifice de sortie d'air orienté vers le haut ;
- la tête de préhension comprend un premier groupe de deux buses d'aspiration et un second groupe de quatre buses d'aspiration, le premier groupe étant séparé du second groupe par une caméra ;
- chaque buse d'aspiration comprend un dispositif silencieux agencé dans la section d'échappement d'air conçu pour réduire le bruit de l'air éjecté par la buse d'aspiration ;
- la pompe à vide est un système venturi.

### Brève description des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
La [Fig.1] est une représentation schématique d'un dispositif de manutention selon l'invention dans une installation de tri colis.
La [Fig.2] est une représentation schématique d'une buse d'aspiration en forme sinusoïdale selon l'invention vue de profil avec la section d'entrée d'air et la section intermédiaire en transparence.
La [Fig.3] est une représentation schématique d'une buse d'aspiration en forme sinusoïdale selon l'invention selon un autre profil avec la section d'entrée intermédiaire et la section d'échappement d'air en transparence.
La [Fig.4] est une représentation très schématique d'une buse d'aspiration en forme de U selon l'invention vue de profil.
La [Fig.5] est une représentation schématique d'une tête de préhension vue de dessous selon l'invention.
La [Fig.6] est une représentation schématique d'une tête de préhension selon l'invention reliée à des électrovannes du dispositif d'injection.
La [Fig.7] est une représentation schématique d'une tête de préhension vue de dessus selon l'invention.
La [Fig.8] est une représentation schématique d'une ventouse selon l'invention vue de dessous.

### Description détaillée de l'invention

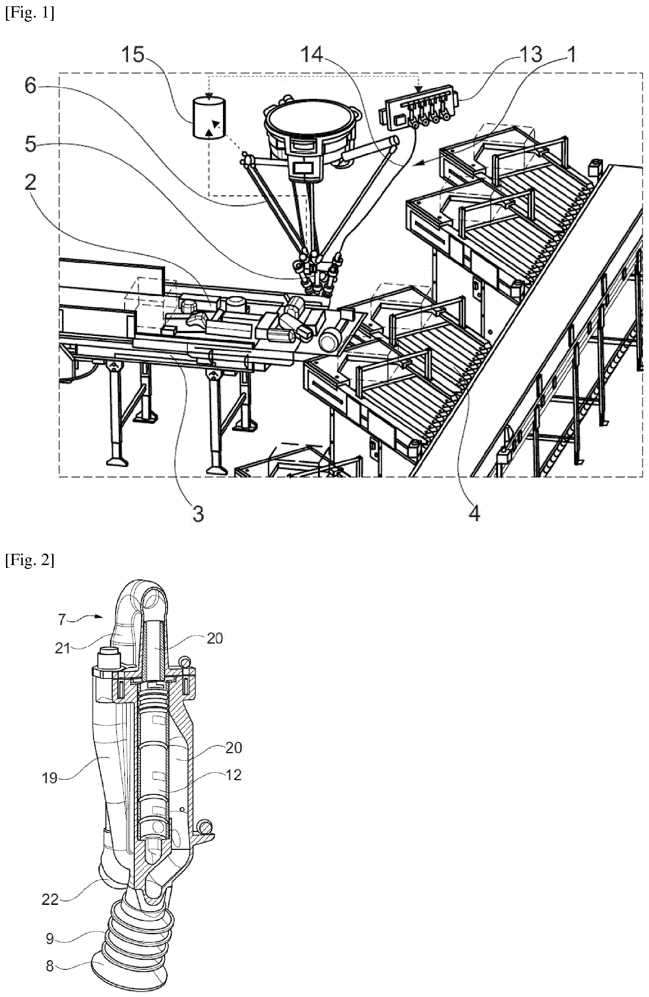

Le dispositif de manutention 1 de colis 2 selon l'invention, représenté en [Fig.1], est particulièrement bien adapté pour être utilisé dans les centres de tri de colis et les centres logistiques.

A titre d'exemple, le dispositif de manutention 1 selon l'invention peut notamment être utilisé pour saisir un par un les colis 2 qui sont stockés en vrac sur un convoyeur d'alimentation 3, les déplacer et les déposer sur un convoyeur de tri 4.

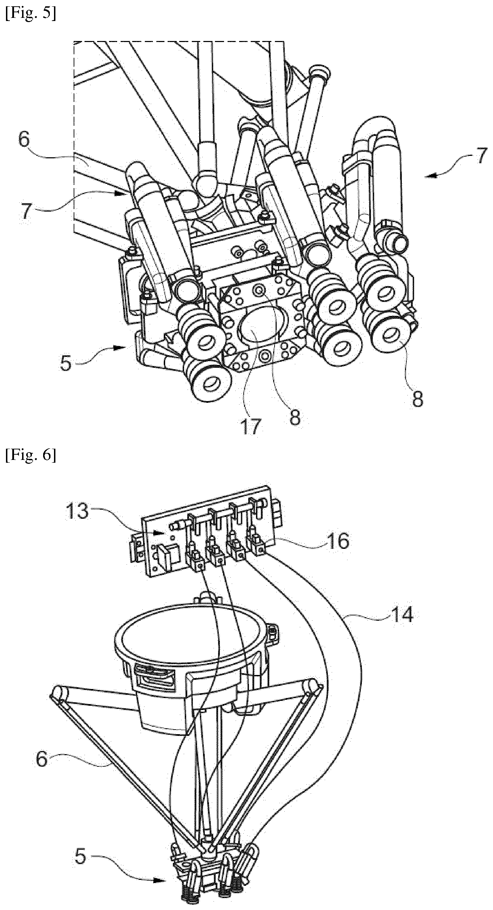

Comme représenté en figures 1, 5 et 6, le dispositif de manutention selon l'invention comprend une tête de préhension 5 montée à l'extrémité aval d'un bras 6 mobile. Le bras 6 mobile est conçu pour déplacer la tête de préhension 5 latéralement et/ou verticalement au-dessus du convoyeur d'alimentation 3 et des colis 2 à saisir.

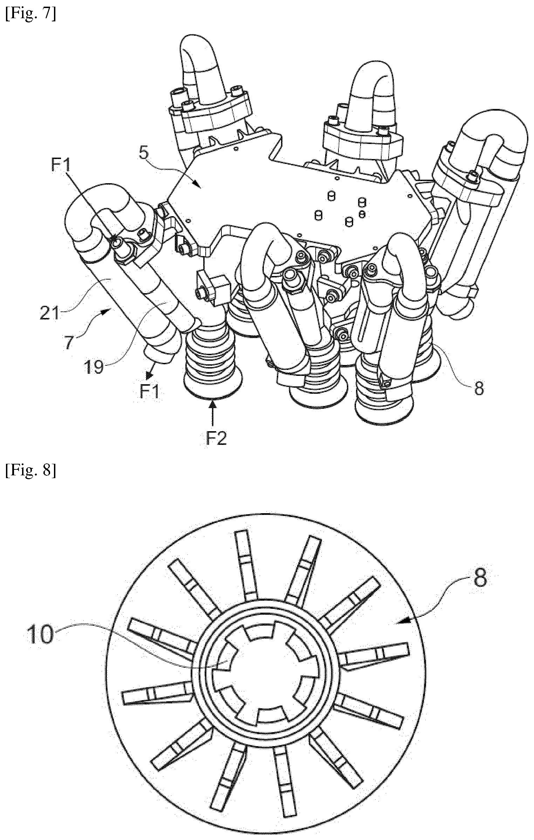

La tête de préhension 5, quant à elle, comprend des buses d'aspiration 7, chacune terminée par une ventouse 8 conçue pour saisir par aspiration un colis 2. Il faut comprendre ici que les ventouses 8 s'étendent verticalement vers le bas de sorte que la tête de préhension est apte à saisir un colis par le dessus. Les ventouses 8 peuvent également se présenter sous la forme de ventouses 8 à soufflets 9 aptes à supporter un certain écrasement pour augmenter l'étanchéité entre le colis 2 et la ventouse 8. Les ventouses 8 à soufflets 9 peuvent également comprendre une bague 10 de rigidification, visible en [Fig.8], à une extrémité aval de la ventouse 8 délimitant un périmètre intérieur de la ventouse visant à limiter les obstructions de la ventouse 8 lorsque celle-ci est écrasée au contact d'un colis 2.

Chaque buse d'aspiration 5 comprend également un conduit de circulation d'air 11 et une pompe à vide 12 disposée dans le conduit de circulation d'air 11.

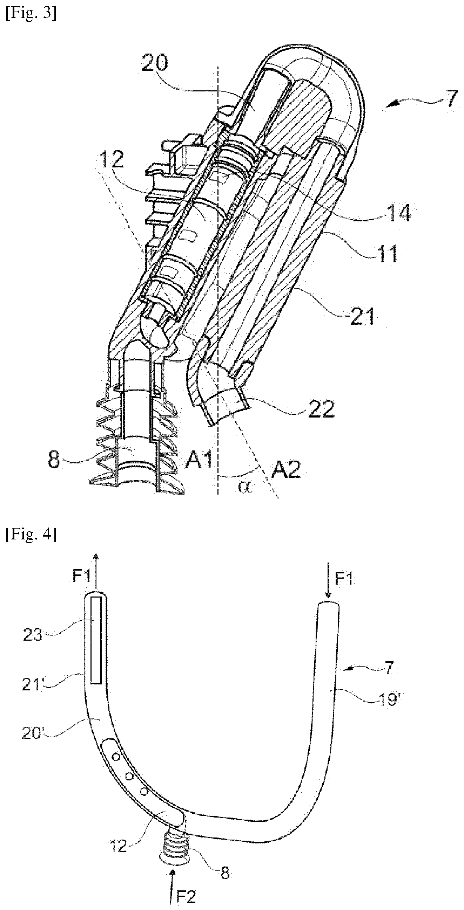

L'alimentation en air des conduits de circulation 11 se fait ici grâce à un dispositif d'injection d'air 13 relié aux buses de préhension 5 par des tuyaux 14 d'alimentation en air. Le dispositif d'injection 13 selon l'invention est ici conçu pour injecter de l'air dans les conduits de circulation d'air 11 selon le sens de circulation de l'air représenté par les flèches F1 en figures 4 et 7, de manière à ce que chaque pompe à vide 12 créée un vide dans une ventouse 8. Chaque conduit de circulation d'air comprend une section d'arrivée d'air 19, 19' qui s'étend sensiblement verticalement vers la ventouse et qui est reliée au dispositif d'injection d'air, une section intermédiaire 20, 20' qui s'étend sensiblement depuis la ventouse et qui prolonge la section d'arrivée d'air dans le sens de circulation de l'air et une section d'échappement d'air 21, 21' qui prolonge la section intermédiaire dans le sens de circulation de l'air et en ce que la pompe à vide est disposée dans la section intermédiaire.

Plus précisément, la section intermédiaire 20, 20' pourra remonter sensiblement le long de la section d'arrivée d'air.

De manière avantageuse, la pompe à vide pourra par exemple être disposée dans la section intermédiaire 20, 20', après la ventouse par rapport au sens de circulation de l'air.

Globalement, lorsque le flux d'air est injecté dans le conduit de circulation 11 de l'air, le flux d'air se déplace longitudinalement dans la section d'arrivée 19, 19' d'air vers la ventouse, ici vers le bas puisque la ventouse est disposée en extrémité basse du conduit de circulation d'air, puis se déplace dans la section intermédiaire 20, 20' sensiblement dans le sens opposé en s'éloignant de la ventouse, ici vers le haut.

La pompe à vide 12 selon l'invention est spécifiquement agencée pour être en connexion fluidique avec le conduit de circulation d'air 11 et la ventouse 8.

Plus particulièrement, la pompe à vide 12 pourra par exemple s'étendre dans le prolongement de la ventouse 8 de manière à former un conduit d'aspiration d'air qui s'étend sensiblement longitudinalement vers le haut.

Cet agencement permet notamment d'optimiser l'efficacité d'aspiration de l'air en limitant les frottements de l'air sur les parois du conduit de circulation d'air 11.

Dans l'exemple représenté sur les figures 2, 3 et 4, la pompe à vide 12 selon l'invention est de type venturi et comprend un corps 13 allongé qui s'étend dans le conduit de circulation d'air 11 depuis la ventouse 8.

Le corps du venturi comprend des ouvertures 14 créant une connexion fluidique entre la ventouse 8 et le conduit de circulation d'air 11.

Ces ouvertures 14 permettent ainsi de créer une dépression d'air dans le venturi et la ventouse 8, suivant le sens de circulation de l'air représenté par la flèche F2 en [Fig.4] et 7, lorsque l'air circule dans le conduit de circulation d'air 11.

Le dispositif de manutention 1 selon l'invention est également conçu pour optimiser l'utilisation des buses d'aspiration 7 notamment en cas de fuites d'air.

Le dispositif de manutention 1 comprend pour cela une unité de contrôle-commande 15 paramétrée pour contrôler le dispositif d'injection d'air 13 et ainsi injecter de l'air dans les buses d'aspiration 7 indépendamment les unes des autres, de manière sélective et selon un certain débit. A titre d'exemple, le dispositif d'injection 13 comprendra par exemple des électrovannes 16, chacune conçue pour alimenter un conduit de circulation d'air 11. L'unité de contrôle-commande 15 sera par exemple paramétrée pour recevoir des données numériques concernant la taille et les irrégularités de la surface de préhension du colis 2 à saisir de sorte à contrôler en retour le dispositif d'injection 13, ici les électrovannes 16, et ainsi alimenter sélectivement une ou plusieurs buses d'aspiration 7.

Des capteurs de pression peuvent également être installés dans les buses d'aspiration 7 ne manière à détecter la présence de fuite d'air au moment de la saisie du colis et à transmettre en temps réel des données numériques représentatives de cette pression à l'unité de contrôle-commande 15 qui commande en retour le débit d'air injecté dans la buse d'aspiration 5 concernée.

Grâce à l'alimentation individuelle des buses d'aspiration 7 par le dispositif d'injection d'air 13, il est possible d'équiper la tête de préhension 5 avec un nombre souhaité de buses d'aspiration 7.

Les buses d'aspiration 7 forment ainsi chacune un bloc modulaire qui peut être monté/démonté sur la tête de préhension 5 et être raccordé au dispositif d'injection 13.

Grâce à cette modularité, la tête de préhension 5 pourra par exemple comprendre des buses d'aspiration 7 réparties en deux groupes. Un premier groupe de deux buses d'aspiration 7 et un second groupe de quatre buses d'aspiration 7, le premier groupe étant séparé du second groupe selon un certain espacement permettant d'ajouter des équipements tels qu'une caméra 17, des éclairages 18 et des capteurs utiles pour le bon fonctionnement de la saisie des colis 2. La séparation des deux groupes de buses d'aspiration 7 permet également de saisir des colis 2 plus ou moins volumineux en alimentant spécifiquement soit le groupe de deux buses d'aspiration 7, soit le groupe de quatre buses 7 ou bien les deux groupes en même temps.

Aussi, de manière à réduire l'encombrement du dispositif de manutention 1 et sans perdre en efficacité d'aspiration, le conduit de circulation d'air 11 comprendra une section d'arrivée d'air 19 qui s'étend sensiblement verticalement vers la ventouse 8 et qui est reliée au dispositif d'injection 13, une section intermédiaire 20 qui remonte le long de la section d'arrivée d'air 19 et qui prolonge la section d'arrivée d'air 19 dans le sens de circulation de l'air, et une section d'échappement d'air 21 qui descend le long de la section d'arrivée d'air 19 et qui prolonge la section intermédiaire 20 dans le sens de circulation de l'air. La section d'arrivée d'air 19 comprendra alors un orifice d'entrée d'air orienté vers le haut tandis que la section d'échappement d'air 21 présentera un orifice de sortie d'air orienté vers le bas. Le conduit de circulation 11 d'air pourra dans ce cas prendre par exemple une forme sensiblement sinusoïdale. Un coude 22 pourra également être prévu au niveau de l'orifice de sortie d'air de sorte à ne pas éjecter l'air injecté par le dispositif d'injection 13 en direction du colis 2 à saisir. Le coude 22, représenté sur la [Fig.3], est orienté selon un axe A2 qui définit un angle α par rapport à l'axe vertical A1 et permet ici de dévier sensiblement le flux d'air éjecté. L'angle α sera supérieur à 0° et inférieur à 90° et compris de préférence entre 15° et 45°.

De manière différente, le conduit de circulation d'air 11 pourra comprendre une section d'arrivée d'air 19' qui s'étend sensiblement verticalement vers la ventouse 8 et qui est reliée au dispositif d'injection 13, une section intermédiaire 20' qui remonte le long de la section d'arrivée d'air 19' et qui prolonge la section d'arrivée d'air 19' dans le sens de circulation de l'air, et une section d'échappement d'air 21' qui prolonge longitudinalement vers le haut la section intermédiaire 20' dans le sens de circulation de l'air. La section d'arrivée d'air 19' comprendra ici un orifice d'entrée d'air orienté vers le haut tandis que la section d'échappement d'air 21' comprendra un orifice de sortie d'air orienté vers le haut. L'air injecté dans le conduit de circulation 11 est donc ici éjecté vers le haut évitant de gêner la saisie du colis 2 et limitant les nuisances sonores. Le conduit de circulation 11 d'air pourra dans ce cas prendre par exemple une forme sensiblement en U. Que ce soit dans le conduit de circulation 11 en forme de U ou en forme sinusoïdale, la pompe à vide 12 sera disposée soit dans la section d'arrivée d'air 19, 19' soit dans la section intermédiaire 20, 20' du conduit de circulation 11. De préférence et comme représenté sur les figures 2, 3 et 4, la pompe à vide 12 est disposée dans la section intermédiaire 20.

Chaque buse d'aspiration 5 pourra également comprendre un dispositif silencieux 23, agencé dans la section d'échappement d'air 21, 21', et conçu pour réduire le bruit de l'air éjecté par la buse d'aspiration 7.

Il est entendu bien sûr que la connexion fluidique entre les différentes sections du conduit de circulation d'air 11 est réalisée à l'aide de sections coudées.

## Revendications

1. Dispositif de manutention (1) de colis (2) comprenant une tête de préhension (5) mobile équipée d'une pluralité de buses d'aspiration (7) chacune terminée par une ventouse (8) conçue pour saisir par aspiration un colis par le dessus, chaque buse d'aspiration comprenant un conduit de circulation d'air (11) et une pompe à vide (12) disposée dans le conduit de circulation d'air, ladite pompe à vide étant en connexion fluidique avec le conduit de circulation d'air et la ventouse, le dispositif de manutention comprenant un dispositif d'injection d'air (13) conçu pour injecter de l'air dans les conduits de circulation d'air de manière à ce que la pompe à vide créée un vide dans les ventouses, chaque conduit de circulation d'air comprenant une section d'arrivée d'air (19 ; 19') qui s'étend sensiblement verticalement vers la ventouse et qui est reliée au dispositif d'injection d'air, une section intermédiaire (20 ; 20') qui s'étend sensiblement depuis la ventouse et qui prolonge la section d'arrivée d'air dans le sens de circulation de l'air et une section d'échappement d'air (21 ; 21') qui prolonge la section intermédiaire dans le sens de circulation de l'air et en ce que la pompe à vide est disposée dans la section intermédiaire **caractérisé en ce que** le dispositif de manutention comprend une unité de contrôle-commande (15) paramétrée pour contrôler le dispositif d'injection d'air de manière à injecter de l'air dans les buses d'aspiration indépendamment les unes des autres.

2. Dispositif selon la revendication 1, **caractérisé en ce que** la pompe à vide s'étend dans le prolongement de la ventouse de manière à former un conduit d'aspiration d'air qui s'étend sensiblement longitudinalement vers le haut.

3. Dispositif selon l'une quelconques des revendications 1 à 2, **caractérisé en ce que** la section d'échappement d'air (21) descend sensiblement le long de la section d'arrivée d'air vers la ventouse.

4. Dispositif de manutention de colis selon la revendication 3, **caractérisé en ce que** la section d'arrivée d'air comprend un orifice d'entrée d'air orienté vers le haut et la section d'échappement d'air comprend un orifice de sortie d'air orienté vers le bas.

5. Dispositif de manutention de colis selon l'une quelconques des revendications 1 à 2, **caractérisé en ce que** la section d'échappement d'air (21') prolonge longitudinalement la section intermédiaire dans le sens de circulation de l'air.

6. Dispositif de manutention de colis selon la revendication 5, **caractérisé en ce que** la section d'arrivée d'air comprend un orifice d'entrée d'air orienté vers le haut et la section d'échappement d'air comprend un orifice de sortie d'air orienté vers le haut.

7. Dispositif de manutention de colis selon l'une quelconques des revendications précédentes, **caractérisé en ce que** la tête de préhension comprend un premier groupe de deux buses d'aspiration et un second groupe de quatre buses d'aspiration, le premier groupe étant séparé du second groupe par une caméra (17).

8. Dispositif de manutention de colis selon l'une quelconques des revendications précédentes, **caractérisé en ce que** chaque buse d'aspiration comprend un dispositif silencieux (23) agencé dans la section d'échappement d'air conçu pour réduire le bruit de l'air éjecté par la buse d'aspiration.

9. Dispositif de manutention de colis selon l'une quelconques des revendications précédentes, **caractérisé en ce que** la pompe à vide est un système venturi.

## Patentansprüche

1. Vorrichtung zum Handhaben (1) von Paketen (2), umfassend einen beweglichen Greifkopf (5), der mit einer Vielzahl von Saugdüsen (7) ausgestattet ist, die jeweils in einem Sauger (8) enden, der dazu ausgelegt ist, ein Paket von oben durch Ansaugen zu erfassen, wobei jede Saugdüse einen Luftströmungskanal (11) und eine in dem Luftströmungskanal angeordnete Vakuumpumpe (12) umfasst, wobei die Vakuumpumpe in Fluidverbindung mit dem Luftströmungskanal und dem Sauger steht, wobei die Handhabungsvorrichtung eine Lufteinblasvorrichtung (13) umfasst, die dazu ausgelegt ist, Luft in die Luftströmungskanale einzublasen, so dass die Vakuumpumpe einen Unterdruck in den Saugern erzeugt, wobei jedes Luftströmungskanal einen Lufteinlassabschnitt (19; 19') umfasst, der sich im Wesentlichen vertikal zum Sauger erstreckt und mit der Lufteinblasvorrichtung verbunden ist, einen Zwischenabschnitt (20; 20'), der sich im Wesentlichen vom Sauger aus erstreckt und den Lufteinlassabschnitt in Luftströmungsrichtung verlängert, und einen Luftauslassabschnitt (21; 21'), der den Zwischenabschnitt in Luftströmungsrichtung verlängert, und dass die Vakuumpumpe im Zwischenabschnitt angeordnet ist, **dadurch gekennzeichnet, dass** die Handhabungsvorrichtung eine Steuer- und Regeleinheit (15) umfasst, die so parametriert ist, dass sie die Lufteinblasvorrichtung so steuert, dass Luft unabhängig voneinander in die Saugdüsen eingeblasen wird.

2. Vorrichtung nach Anspruch 1, **dadurch gekennzeichnet, dass** sich die Vakuumpumpe so in Verlängerung des Saugers erstreckt, dass ein sich im Wesentlichen in Längsrichtung nach oben erstreckender Luftansaugkanal gebildet wird.

3. Vorrichtung nach einem der Ansprüche 1 bis 2, **dadurch gekennzeichnet, dass** der Luftauslassabschnitt (21) im Wesentlichen entlang des Lufteinlassabschnitts zum Sauger hin abfällt.

4. Vorrichtung zum Handhaben von Paketen nach Anspruch 3, **dadurch gekennzeichnet, dass** der Lufteinlassabschnitt eine nach oben gerichtete Lufteinlassöffnung umfasst und der Luftauslassabschnitt eine nach unten gerichtete Luftauslassöffnung umfasst.

5. Vorrichtung zum Handhaben von Paketen nach einem der Ansprüche 1 bis 2, **dadurch gekennzeichnet, dass** der Luftauslassabschnitt (21') den Zwischenabschnitt in Luftströmungsrichtung in Längsrichtung verlängert.

6. Vorrichtung zum Handhaben von Paketen nach Anspruch 5, **dadurch gekennzeichnet, dass** der Lufteinlassabschnitt eine nach oben gerichtete Lufteinlassöffnung umfasst und der Luftauslassabschnitt eine nach oben gerichtete Luftauslassöffnung umfasst.

7. Vorrichtung zum Handhaben von Paketen nach einem der vorstehenden Ansprüche, **dadurch gekennzeichnet, dass** der Greifkopf eine erste Gruppe von zwei Saugdüsen und eine zweite Gruppe von vier Saugdüsen umfasst, wobei die erste Gruppe durch eine Kamera (17) von der zweiten Gruppe getrennt ist.

8. Vorrichtung zum Handhaben von Paketen nach einem der vorstehenden Ansprüche, **dadurch gekennzeichnet, dass** jede Saugdüse eine Schalldämpfungsvorrichtung (23) umfasst, die im Luftauslassabschnitt angeordnet ist, um das Geräusch der aus der Saugdüse ausgestoßenen Luft zu vermindern.

9. Vorrichtung zum Handhaben von Paketen nach einem der vorstehenden Ansprüche, **dadurch gekennzeichnet, dass** die Vakuumpumpe ein Venturi-System ist.

## Claims

1. Device for handling (1) parcels (2), comprising a movable gripping head (5) equipped with a plurality of suction nozzles (7), each terminated by a suction pad (8) designed to take hold of a parcel from above by suction, each suction nozzle comprising an air circulation duct (11) and a vacuum pump (12) disposed in the air circulation duct, said vacuum pump being in fluidic connection with the air circulation duct and the suction pad, the handling device comprising an air injection device (13) designed to inject air into the air circulation ducts, in such a way that the vacuum pump creates a vacuum in the suction pads, each air circulation duct comprising an air inlet section (19; 19') which extends substantially vertically to the suction pad and which is connected to the air injection device, an intermediate section (20; 20') which extends substantially from the suction pad and which extends the air inlet section in the direction of circulation of air and an air emission section (21; 21') which extends the intermediate section in the direction of circulation of air and in that the vacuum pump is disposed in the intermediate section, **characterised in that** the handling device comprises a command and control unit (15) configured to control the air injection device so as to inject air into the suction nozzles, independently from one another.

2. Device for handling parcels according to claim 1, **characterised in that** the vacuum pump extends into the extension of the suction pad so as to form an air suction duct which extends substantially longitudinally upwards.

3. Device for handling parcels according to any one of claims 1 to 2, **characterised in that** the air emission section (21) descends substantially along the air inlet section to the suction pad.

4. Device for handling parcels according to claim 3, **characterised in that** the air inlet section comprises an air inlet orifice oriented upwards and the air emission section comprises an air outlet orifice oriented downwards.

5. Device for handling parcels according to any one of claims 1 to 2, **characterised in that** the air emission section (21') extends longitudinally the intermediate section in the direction of circulation of air.

6. Device for handling parcels according to claim 5, **characterised in that** the air inlet section comprises an air inlet orifice oriented upwards and the air emission section comprises an air outlet orifice oriented upwards.

7. Device for handling parcels according to any one of the preceding claims, **characterised in that** the gripping head comprises a first group of two suction nozzles, and a second group of four suction nozzles, the first group being separated from the second group by a camera (17).

8. Device for handling parcels according to any one of the preceding claims, **characterised in that** each suction nozzle comprises a silent device (23) arranged in the air emission section designed to reduce noise from the air ejected by the suction nozzle.

9. Device for handling parcels according to any one of the preceding claims, **characterised in that** the vacuum pump is a Venturi system.
